# EUROPEAN PATENT SPECIFICATION

(11) **EP 3 850 040 B1**
(45) Date of publication and mention of the grant of the patent: **19.04.2023**
(21) Application number: 19779369.8
(22) Date of filing: 09.09.2019
(51) Int. Cl.: C08K 5/098, C08L 27/24

(54) **A STABILIZED CHLORINATED POLYVINYLCHLORIDE AND AN ARTICLE MADE THEREFROM**
STABILISIERTES CHLORIERTES POLYVINYLCHLORID UND DARAUS HERGESTELLTER ARTIKEL
POLYCHLORURE DE VINYLE CHLORÉ STABILISÉ ET ARTICLE FABRIQUÉ À PARTIR DE CELUI-CI

(30) Priority: 10.09.2018 IT 201800008448
(43) Date of publication of application: 21.07.2021
(73) Proprietor: Reagens S.p.A., 40016 S. Giorgio Di Piano (IT)
(72) Inventor: BERNA, Mario, 40122 BOLOGNA (IT); GARDI, Stefano, 40122 BOLOGNA (IT); TINARELLI, Alessandro, 40124 BOLOGNA (IT)
(74) Representative: Cattaneo, Elisabetta
(86) International application number: PCT/EP2019/074008
(87) International publication number: WO 2020/053157

(56) References cited:
- EP-A1- 2 083 044
- EP-A1- 2 363 431
- EP-A9- 2 363 431
- US-A1- 2016 009 896
- US-A1- 2016 017 123

## Description

### FIELD OF THE INVENTION

The invention concerns a stabilized chlorinated polyvinylchloride (CPVC) having also an appropriate short fusion time. The stabilized CPCV is obtainable through the use of a stabilizing composition comprising disodium adipate in suitable amounts and in absence of stannous and stannic stabilizers.

### STATE OF THE ART

Chlorinated polyvinyl chloride (CPVC) is gaining more and more importance in the industry in view of its superior mechanical properties with respect to PVC (Journal of Vinyl and Additive Technology1986, 8(4), 146-150). In particular PVC has a higher VICAT softening temperature than PVC.

Halogen-containing polymers must be subjected to temperatures within more or less wide range around 190°C in order to be worked by known processes, such as molding, calendaring and extrusion.

It is known that halogen-containing polymers tend to degrade at the above cited processing temperatures due to the inherent degradation temperature of the halogenated polymers themselves, that at said temperatures release hydrochloric acid with formation of double bonds.

These alteration phenomena of the structure of the chlorinated polymers manifest themselves as a deterioration of the mechanical properties and a darkening effect in colour. This problem of deterioration is exacerbated when the residence time at higher temperature during working is longer.

Tin stabilizers are traditionally used as CPVC stabilizers but it is known that they are toxic and it is desirable to eliminate them from stabilizing compositions for halogenated polymers.

Moreover, presently known CPVC stabilizers provide a limited thermal stability.

In US 2017/0029593 a composition resin for molding including a chlorinated vinyl chloride, a thermal stabilizer a polyalcohol and/or a partial ester of a polyalcohol is described. The stabilizing composition for CPVC is proposed with the aim of avoiding the use of metal stabilizers, specifically tin stabilizers. The herein described thermal stabilizer contains at least one of a compound represented by the formula Ca₁₋ₓZnₓ(OH)₂, where x satisfies the inequality 0<x<1 and a compound represented by the formula Ca_{1-y}Zn_{y}O where y satisfies the inequality 0<y<1.

In EP2083044 a stabilizing composition for halogen-containing polymers comprising disodium adipate and at least one compound selected from the group consisting of metal perchlorates and trifluoro-sulfates is proposed. In Example 4 the stabilization of C-PVC is suggested, but the final stabilizing composition still contains tin derivative stabilizers in order to guarantee good Congo red (CR) stabilities with low yellowness indexes.

Furthermore, in case of CPVC it is also desirable to have an appropriately short time to fusion in processing (as for example in an extruder) to obtain good quality articles.

Therefore it is still felt the need of a stabilizing composition, that guarantees good stabilizing effects in absence of tin stabilizers and is capable to give appropriately short time to fusion in processing in order to obtain good quality articles.

### SUMMARY OF THE INVENTION

The present inventors surprisingly found out that disodium adipate used in a specific amount can efficiently stabilize chlorinated polyvinylchloride with also heat short fusion time, when used in a stabilizing composition that does not contain tin stabilizers.

In a first aspect the invention hence concerns a halogenated resin as defined in claim 1.

The halogenated resin of the invention can be in rigid, semirigid and plasticized formulation.

When in the present invention the following terms are used:
- "Halogenated resin in plasticized formulation" or "halogenated resin in semirigid formulation" it is meant a resin comprising chlorinated polyvinylchloride formulated with a certain amount of plasticizer compounds;
- "Halogenated resin in rigid formulation", it is meant a resin formulation comprising chlorinated polyvinylchloride and substantially free of plasticizer compounds.

It was surprisingly found out that the specific amount of disodium adipate has a surprising stabilizing effect when formulated with CPVC with respect to PVC, even in absence of tin stabilizers. Surprisingly the CPVC resin formulation of the invention showed short fusion time, thus allowing a better workability of the resin itself.

The present inventors surprisingly also found out that disodium adipate stabilizes chlorinated polyvinylchloride at a particularly efficient extent if fine in particle size. As disodium adipate is particularly useful in solid form providing easier handling, the particle size of the disodium adipate is of peculiar technical importance.

In another aspect the invention relates to the use as defined in claim 7.

### DETAILED DESCRIPTION OF THE INVENTION

Therefore the invention relates to a halogenated resin as defined in claim 1.

The disodium adipate salt of the stabilizing composition of CPVC resin is present in an amount of above 0.3 parts by weight per 100 parts of polymer (phr), preferably from 0.35 to 1.6, still more preferably equals to 0.9 parts by weight per 100 parts by weight of CPVC.

The disodium adipate of the stabilizing composition shows a particle size distribution showing a D90 value lower than 8.0 micron, a D50 value lower than 1.8 micron and a D10 value lower than 0.6 micron.

The present inventors surprisingly also found out that disodium adipate stabilizes chlorinated polyvinylchloride at a particularly efficient extent if fine in particle size. As disodium adipate is particularly useful in solid form providing easier handling, the particle size of the disodium adipate is of peculiar importance.

The stabilizing composition comprised in the resin formulation of the invention can also comprise one or more stabilizers and co-stabilizers other than tin stabilizer. The optional stabilizers or costabilizers can be selected from the group consisting of metal soaps, perchlorates and perfluoroalkanesulphonates, monosodium adipate, antioxidants, alkanolamines, zeolites and hydrotalcites polyols, organic phosphites, β-aminocrotonic acid esters and organic co-stabilizers such as dihydropyridines, polydihydropyridines and uracil derivatives.

The optional stabilizer is preferably comprised in the stabilizing composition in a amount in the range from 0.05 to 4 parts by weight per 100 parts of CPVC.

The following can be cited as a non-limiting examples of stabilizers:

### Metal soaps

All metal soaps known for use as polyvinyl chloride (PVC) stabilizers are suitable for the invention. These are preferably organic sodium, lithium, potassium, calcium, zinc, magnesium and aluminium salts of saturated C₂-C₂₂ aliphatic carboxylates, unsaturated C₂-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates, unsubstituted or substituted with at least one OH group and/or substituted with C₁-C₁₆ alkyl, naphthylcarboxylates, unsubstituted or substituted with at least one OH group and/or substituted with C₁-C₁₆ alkyl, phenyl- (C₁-C₁₆)alkylcarboxylates, naphthyl-(C₁-C₁₆)alkylcarboxylates, or phenolates, unsubstituted or substituted with C₁-C₁₂ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, oxalic acid, salicylic acid, phthalic acid, isophthalic acid, terephthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP 3275570; and colophonic acids (rosin acids such as abietic acid), and superbasic carboxylates.

Metal soaps preferred in the present invention are metal carboxylates of a carboxylic acid containing from 2 to 25 carbon atoms, being typically, acetates, benzoates, or alkanoates, and preferably Cs-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing sodium, zinc and/or calcium soaps.

Zn, Li, K, Mg, Ca, Na salts of the aforestated fatty acids containing from 2 to 25 carbon atoms are preferably added to the resin or to the composition/product of the invention.

### Non-metal stabilizers

Among metal-free stabilizers esters of β-aminocrotonic acid can be cited. Considered suitable among these compounds are for example β-aminocrotonic acid stearyl ester, 1,4-butanediol-di(β-aminocrotonic acid) ester, thio-diethanol-β-aminocrotonic acid ester.

### Perchlorates and perfluoroalkanesulphonates

The polymer stabilizing composition can also comprise a compound selected from the group consisting of M(ClO₄)ₖ and M(CF₃SO₃)ₙ in which M is selected from the group consisting of H⁺, Li⁺, Na⁺, K⁺, Mg²⁺, Ca²⁺, Ba²⁺, Zn²⁺, Al³⁺ and NH₄⁺, and k and n are 1, 2 or 3 depending on the valency of M.

M is preferably selected from the group consisting of Li+, Na⁺, K+, Mg²⁺, Ca²⁺ and Zn²⁺, more preferably M is selected from the group consisting of Na⁺, K+ and Ca²⁺, and still more preferably it is sodium.

In case of use of a compound of formula M(CF₃SO₃)ₙ, this is preferably trifluoromethanesulphonic acid or a sodium salt thereof, more preferably it being sodium trifluoromethanesulphonate.

Preferred for the purposes of the invention is the use of perchloric acid or perchlorate salts. These can be used in various forms, for example preparations such as salts or aqueous or organic solutions, supported on various materials such as PVC, calcium silicate, zeolites or hydrotalcites or bound to a hydrotalcite by chemical reaction.

Furthermore, the preferred perchlorates of the invention are complexes of metal perchlorate, more preferably sodium perchlorate, with triethylene glycol, butyldiglycol or polyethylene glycol.

The composition of the invention can also comprise other additives/excipients able to behave as co-stabilizers, selected from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

### Antioxidants

The organic antioxidants used in the present invention are selected from those already known as additives for plastic materials. For the purposes of the invention, preferred are one or more antioxidants selected from the group consisting of alkylidene-bisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-dicyclohexyl-4-hydroxyphenyl)propionic acid with mono- or poly-alcohols. Particularly preferred according to the invention are 2,2'-methylene-bis(6-tert-butyl-4-methylphenol), commercially available as Lowinox^{®} 22 M46 produced by Chemtura, and esters of β-(3,5-di-tert-butyl-4-hydroxyphenyl)propionic acid with octadecanol and with pentaerythritol, respectively Arenox^{®} A76 and Arenox^{®} A10, produced by Reagens, and bisphenol A.

The aforedescribed antioxidants, if present, are preferably included in an amount within the range from 0.01 to 1.0 parts by weight, more preferably from 0.1 to 0.5 parts by weight, per 100 parts by weight of CPVC.

### Organic co-stabilizers

The invention also provides for the optional presence of organic co-stabilizers in the composition of the invention to further increase the effectiveness of the stabilizing composition. The organic co-stabilizers optionally present in the stabilizing composition of the invention are preferably one or more compounds selected from dihydropyridines, polydihydropyridines, and uracil derivatives.

*Dihydropyridines (DHP).* Preferred monomeric dihydropyridine derivatives for use in the present invention include carboxylic acids esters of general formula (II): 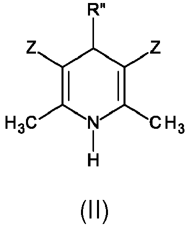 wherein Z is CO₂C₂H₅ or CO₂(n-C₁₂H₂₅) and R" is hydrogen, C₁-C₁₈ alkyl, C₂-C₁₈ alkoxycarbonyl or C₆-C₁₀ aryl.

Particularly preferred are 3-bisdodecyloxycarbonyl-2,6-dimethyl-1,4-dihydropyridine, commercially available as Stavinor^{®} D507 (PMC Group).

*Uracil derivatives.* The uracil derivatives advantageously present in the composition of the invention are described by general formula (III): 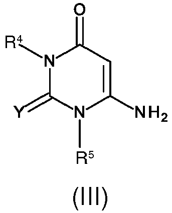 wherein:
R⁴ and R⁵ are, independently of one another, hydrogen, C₁-C₁₂ alkyl, C₃-C₆ alkenyl, C₅-C₈ cycloalkyl optionally substituted with 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with 1 to 3 C₁-C₄ alkyl, C₁-C₄ alkoxy, C₅-C₈ cycloalkyl or hydroxyl or with chlorine atoms; Y can be oxygen or sulphur.

Examples of C₁-C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl. Examples of C₁-C₄ alkoxy are methoxy, ethoxy, propoxy, isopropoxy, butoxy, isobutoxy.

Examples of C₅-C₈ cycloalkyl are cyclopentyl, cyclohexyl, cycloheptyl, cyclooctyl. Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably selected from chlorine, hydroxyl, methyl or methoxy.

Examples of C₃-C₆ alkenyl are allyl, methallyl, 1-butenyl, or 1-hexanyl, preferably allyl.

Preferred are the compounds of the aforestated formula, in which R⁴ and R⁵ are, each independently of the other, C₁-C₄ alkyl and hydrogen; in particular, the compound in which R⁴ and R⁵ are methyl is preferred.

Among the uracil derivatives there can also be optionally present in the composition of the invention oligomeric or polymeric derivatives of formula (III'): (III') wherein: 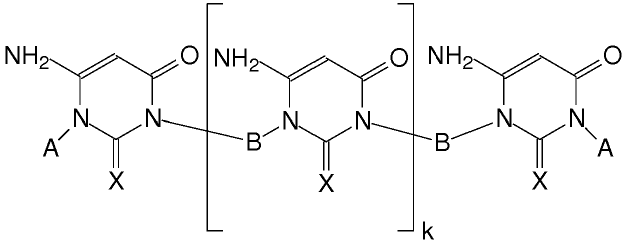
A is n-octyl, n-octadecyl, oleyl, phenyl, cyclohexyl or 3-hydroxyphenyl and
B is hexamethylene, 3-methylene-3,5,5,trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic co-stabilizers can be present preferably in an amount within the range from 0.01 to 1.0 parts by weight, in particular from 0.1 to 0.5 parts by weight, per 100 parts by weight of CPVC.

### Alkanolamines

Alkanolamines, advantageously present in the composition of the invention, are compounds of general formula (IV): 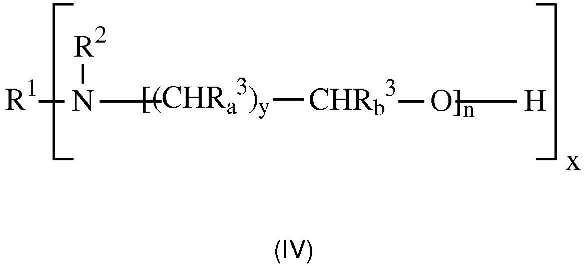 wherein
x = 1, 2, 3;
y = 1, 2, 3, 4, 5 or 6;
n is from 1 to 10
R¹ and R² are independently H, C₁-C₂₂ alkyl, 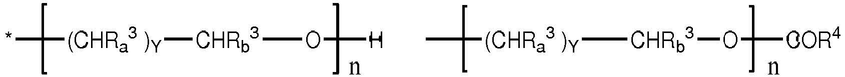
C₂-C₂₀ alkenyl, C₂-C₁₈ acyl, C₄-C₈ cycloalkyl, which can also be hydroxyl-substituted in position β, C₆-C₁₀ aryl, C₇-C₁₀ arylalkyl or alkylaryl, or if x = 1, then R¹ and R² can be additionally combined with nitrogen to form a cyclo of 4-10 carbon atoms and optionally up to 2 heteroatoms, or if x = 2, then R¹ can additionally be C₂-C₁₈ alkylene, which can be hydroxyl-substituted at both carbon atoms in β and/or can be interrupted by one or more NR groups;
Rₐ³, R_{b}³ are independently C₁-C₂₂ alkyl, C₂-C₆ alkenyl, C₆-C₁₀ aryl, H or CH₂-X-R⁵, where X is oxygen, sulphur, -O-CO- or CO-O-;
R⁴ is C₁-C₁₈ alkyl, alkenyl or phenyl and
R⁵ is H, C₁-C₂₂ alkyl, C₂-C₂₂ alkenyl, or C₆-C₁₀ aryl.

Preferred trialkanolamines of general formula (IV) are those in which Rₐ³, R_{b}³ are, each independently of the other, H or methyl, and y = 1.

Other alkanolamines are diamines of general formula (V): 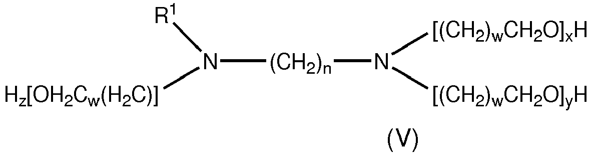 wherein:
n is an integer from 3 to 4, x, y, z are independently of each other an integer from 1 to 20, w is an integer from 1 to 2, R¹ is a C₈-C₂₀ hydrocarbon residue of a compound selected from the group consisting of tallow, cottonseed oil, soya bean oil, and coconut oil. The diamine (V) of the invention is advantageously N,N',N'-tris(3-hydroxypropyl)-N-coco-alkyl-1,3-propanediamine, N,N,N'-(2-hydroxyethyl)-N'-C₁₂₋₁₈-alkyl-1,3-propanediamine, N,N',N'-tris-(2-hydroxyethyl)-N-tallow-alkyl-1,3-propanediamine, N,N',N'-polyoxyethylene(15)-N-tallow-alkyl-1,3-propanediamine, or N,N',N'-tris(2-hydroxyethyl)-N-coco-alkyl-1,3-propanediamine.

Examples of preferred alkanolamines according to the general formula are: tri(hydroxyethyl)amine, tri(hydroxypropyl)amine.

The aforedescribed alkanolamines can be present preferably in an amount within the range from 0.01 to 1.0 parts by weight, in particular from 0.1 to 0.5 parts by weight, per 100 parts by weight of polymer and are preferably used in combination with perchlorates and perfluoroalkanesulphonates.

### Hydrotalcites

The hydrotalcites optionally present in the compositions of the invention can be described by the following general formula:

[M²⁺₁₋ₓM³⁺ₓ(OH)₂]^{x+}[Aⁿ⁻_{x/n}mH2O]^{x-}

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4; x and m represent positive numbers which satisfy the following expressions
0.2 < x ≤ 0.33 and
m > 0.

In the general formula above, Aⁿ represents an anion selected from the group consisting of CO₃²⁻, OH⁻, HCO³⁻, ClO⁴⁻, NO³⁻, I⁻, [Fe(CN)₆]⁴⁻, acetate, salicylate, tartrate (bivalent) and oxalate (bivalent).

The preferred hydrotalcites of the invention are those in which Aⁿ⁻ is selected from CO₃²⁻, OH⁻.

The preferred empirical formulas for hydrotalcite considered for the invention are:

Mg₆Al₂(OH)₁₆CO₃·4H₂O

Mg₄Al₂(OH)₁₂CO₃·3H₂O

### Zeolites

The zeolites optionally present in the compositions of the invention can be described by the general formula:

M_{q/a}[(AlO₂)_{q}(SiO₂)ᵣ]·wH₂O

in which a is the charge on the cation M,

M is an element of the alkali or alkaline-earth metal group, in particular Na, K, Mg, q is a number greater than or equal to 2, the q/r ratio is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are zeolites having a particle size mainly within the range from 0.5 to 10 micron.

The preferred zeolites, which are known *per se,* have an effective mean cavity diameter of 3-5 Å and can be prepared by known methods.

Also particularly preferred are zeolites of type NaA, which have an effective mean cavity diameter of 4 Å, and are hence known as 4A zeolites, indicated by the formula:

Na₁₂Al₁₂Si₁₂O₄₈·27H₂O.

Particular preference is given to those zeolites satisfying the aforestated general formula, known as X zeolites and indicated by the formula

(Na₂,Ca,Mg)₂₉Al₅₈Si₁₃₄O₃₈₄·240H₂O.

### Polyols

Among the polyols, optionally present in the composition of the invention, the following are preferred:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate. Most preferred among polyols are tris(hydroxyethyl)isocyanurate (THEIC), pentaerythritol, dipentaerythritol, trimethylolpropane, bistrimethylolpropane, sorbitol.

The polyols, if present, are present preferably in an amount within the range from 0.01 to 2 parts by weight, more preferably from 0.1 to 1 parts by weight, per 100 parts by weight of halogen-containing polymer.

### Phosphites

The phosphites, optionally present in the composition of the invention, are preferably organic phosphites of general formula P(OR)₃, in which the radicals R are identical or different and can be C₆-C₁₈ alkyl, C₆-C₁₈ alkenyl, C₅-C₇ cycloalkyl. Also included as preferred in the invention are acid phosphites of general formula P(OH)R₂, in which the radicals R are identical or different and selected from C₆-C₁₈ alkyl, C₆-C₁₈ alkenyl, phenyl, mono- or di-alkylphenyl, or C₅-C₇ cycloalkyl.

Phosphites with the following general formula can also be present in the composition of the invention: 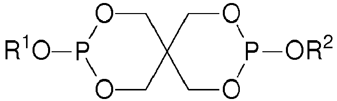 in which R¹ and R² are identical or different and are C₆-C₁₈ alkyl, C₆-C₁₈ alkenyl, phenyl, mono- or di-alkylphenyl, or C₅-C₇ cycloalkyl. Preferred of these latter phosphites are those in which R¹, R² = stearyl or

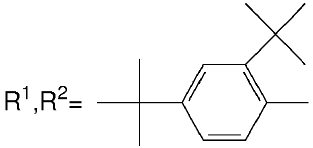

Phosphites with the following general formula can also be present:

(R¹O)₂-PO-R²-OP-(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl.

Each C₆-C₁₈ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂-₁₅ alcohol) phosphite, bis(2,4-di-t-butylphenyl)pentaerythritol diphosphite, distearyl pentaerythritol diphosphite.

The phosphites, if present, are preferably in an amount within the range from 0.1 to 2 parts by weight, more preferably from 0.2 to 0.5 parts by weight, per 100 parts by weight of CPVC.

In a preferred embodiment of the invention the stabilizing composition consists of disodium adipate in an amount above 0.3 parts by weight per 100 parts of chlorinated polyvinylchloride and no other stabilizers or co-stabilizers are used. The halogenated resin of the invention can be in a rigid, semirigid and plasticized formulation.

The halogenated resin can be a plasticized or semirigid formulation comprising chlorinated polyvinylchloride formulated with plasticizer compounds.

The halogenated resin can be a rigid formulation comprising chlorinated polyvinylchloride and being substantially free of plasticizer compounds.

The compounds present in the stabilizing composition can be added to the resin formulation by mixing through dry blending. The resin formulation is then used to prepared final articles of CPVC. The final products article can be any type of CPVC product, which needs an enhanced thermal stabilization, for example: extruded and injection molded articles, rigid and semirigid films, sheets, profiles, automotive parts. The articles may be manufactured by any process available to those of ordinary skill in the art including, but not limited to, extrusion, injection molding, compression molding, thermoforming, slush molding.

In another aspect the invention relates to the use as defined in claim 7.

The invention will be now detailed by illustrative and non-limitative examples

### Experimental part

### Examples 1-7

All starting materials were commercially available.

### Main Ingredients:

### Chlorinated polyvinylchloride (CPVC)

### Disodium adipate

CPVC was available from Sekisui, Kaneka, Kern One as Sekisui HA-58K, Kaneka H829F, Kern One RB 1167, Kern One RB 8065, Kern One RB 8067, Sekisui HA-24KL

Disodium adipate was available from Reagens S.p.A. and had the following particle size by volume density as measured by a Malvern Metasizer 3000 equipped with Aero S accessory for powder analysis:

| D90 (µm) | D50 (µm) | D10 (µm) |
|---|---|---|
| 7.8 | 1.7 | 0.5 |

The resin formulation contained the above specified further main ingredients and ingredients in the amounts, expressed as parts by weight per 100 parts by weight of CPVC (phr), as summarized in the following Table 1:

**Table 1: resin formulation (I) according to the invention for Examples 4-7**

| **Ingredients** | **phr** |
|---|---|
| Disodium adipate | 0.35(Ex.4),0.60(Ex.5), 0.90(Ex.6),1.60 (Ex.7) |
| Polyethylen, oxidized | 0.60 |
| Paraffin waxes and Hydrocarbon waxes | 0.90 |
| 2,2,2',2'-tetrakis(hydroxymethyl)-3,3'-oxydipropan-1-ol | 0.60 |
| Glycerides, C16-18 mono- and di- | 0.30 |
| pentaerythritol tetrakis(3-(3,5-di-tert-butyl-4-hydroxyphenyl)propionate) | 0.15 |
| Fatty acids, C16-18, calcium salts | 0.60 |
| Reaction mass of 1-phenyloctadecane-1,3-dione and phenylicosane-1,3-dione | 0.20 |
| Fatty acids, C16-18, zinc salts | 0.70 |
| calcium carbonate | 5.00 |

Formulations indicated with (C) were a comparative ones (Examples 1,2 and 3) and contained the same ingredients as Formulation (I) of the invention other than the amount of disodium adipate as it will be evident from the Table 2 below. Formulations (I) and (C) were two roll milled to obtain 0.3-0.5 mm sheets, for 3 minutes at 190°C. Rectangular samples (1.5×24 cm) were cut from each sheets. The following tests were used.

### Test for the evaluation of thermal stabilization:

The sheets were submitted to heating at 200°C in glass tubes according to the well-known Congo Red test until color change to red of an indicator paper placed on top of the tubes due to the evolution of HCl triggered by the chlorinated resin degradation. According to this rule, the higher the time to color change to red the better the thermal stabilization. This test, as it was performed on thermoformed samples at high temperature was representative of the long term thermal stabilization of the processing of Chlorinated polyvinylchloride.

### Test for the evalution of VICAT:

VICAT softening temperature was evaluated according to ISO306 on 2 mm compression molded plaques of the tested formulations

This test, as it was performed on thermoformed samples at high temperature was representative of the VICAT temperature of chlorinated polyvinylchloride samples (CPVC).

### Test for the evaluation of fusion:

In order to evaluate the fusion, the reology behavior of the formulations (C) and (I) was evaluated.

The rheology was evaluated with a Brabender PL2100/3 torque rheometer fitted with a W50EH roller mixer head at 190°C, 40 rpm and 62 g sample formulation as in Table 1 for 8 minutes. Time to fusion was the time to maximum torque that indicated the fusion time.

This test, as it was performed on high temperature processing with rotors similar to the ones of an extruder was representative of the fusion behavior in an extruder of chlorinated polyvinylchloride (CPVC) added with disodium adipate.

The results for Resin formulations (I) and (C) are reported in the following table 2 together with the amounts of disodium adipate

| | Ex. 1 | Ex. 2 | Ex. 3 | Ex. 4 | Ex. 5 | Ex. 6 | Ex. 7 |
|---|---|---|---|---|---|---|---|
| Formulation | (C) | (C) | (C) | (I) | (I) | (I) | (I) |
| CPVC (67%Cl) | 100.00 | 100.00 | 100.00 | 100.00 | 100.00 | 100.00 | 100.00 |
| Disodium adipate | 0.00 | 0.10 | 0.30 | 0.35 | 0.60 | 0.90 | 1.60 |
| Congo Red (min) | 36 | 41 | 52 | 53 | 66 | 75 | 115 |
| VICAT softening temperature (°C) | >82°C | >82°C | >82°C | >82°C | >82°C | >82°C | >82°C |
| Time to fusion (sec) | n.d. | 80 | 80 | 78 | 77 | 76 | 73 |

Formulations according to the present invention in Table 2 fulfill all the following desirable features:
- Congo red stability ≥ 53 min. This value is the minimum value in order to obtain a chlorinated resin formulation capable to withstand the industrially used processing procedure;
- VICAT > 82°C;
- Time to fusion ≤ 78 sec. This value is the maximum value in order to obtain a chlorinated resin formulation capable to provide good quality articles.

The formulations of the inventions (I) hence allow obtaining a stabilized CPVC formulations with short fusion time also in absence of tin stabilizers.

### Examples 8-9

Evaluation of disodium adipate with the following different particle size (obtained with a Malvern Metasizer 3000 equipped with Aero S accessory for powder analysis) was run according to the experimental procedures described in Examples 1-7:

| Sample | D90 (µm) | D50 (µm) | D10 (µm) |
|---|---|---|---|
| Disodium adipate 1 | 7.8 | 1.7 | 0.5 |
| Disodium adipate 2 | 32.0 | 9.6 | 0.8 |

The results are reported in the following table:

| | Ex. 8 | Ex. 9 |
|---|---|---|
| Formulation | (I) | (C) |
| CPVC (67%Cl) | 100.00 | 100.00 |
| Disodium adipate 1 | 0.90 | - |
| Disodium adipate 2 | - | 0.90 |
| Congo Red (min) | 75 | 58 |
| VICAT softening temperature (°C) | >82°C | >82°C |
| Time to fusion (sec) | 76 | 76 |

As shown from the above results, both the compositions according to Example 8 and 9 achieve a suitable Congo Red stability in order to obtain a chlorinated resin formulation capable to withstand the industrially used processing procedure. At the same time, it can be noticed that the use of disodium adipate with finer a particle size (example 8) allow obtaining a stabilized CPVC formulation with an even higher thermal stability, also in absence of tin stabilizers, thus demonstrating the relevance of the particle size of the disodium adipate and the preferability of a particle size showing a D90 value lower than 8.0 micron, a D50 value lower than 1.8 micron and a D10 value lower than 0.6 micron.

### Examples 10-11

Evaluation of disodium adipate and disodium succinate with analogue particle size as disodium adipate 1 was run according to the experimental procedures described in Examples 1-7.

The results are reported in the following table:

| | Ex. 10 | Ex. 11 |
|---|---|---|
| Formulation | (I) | (C) |
| CPVC (67%Cl) | 100.00 | 100.00 |
| Disodium adipate 1 | 0.90 | - |
| Disodium succinate | - | 0.90 |
| Congo Red (min) | 75 | <53 |

As shown from the above results, in example 10 a stabilized CPVC formulation with higher thermal stability, also in absence of tin stabilizers, is obtained, compared to example 11, where a stabilizing formulation based on disodium succinate was used. This demonstrates the importance of the anion of the sodium salt in the stabilizing composition.

## Claims

1. A halogenated resin comprising chlorinated polyvinylchloride (CPVC) and a stabilizing composition comprising disodium adipate in an amount above 0.3 parts by weight per 100 parts of polymer (phr),
wherein the halogenated resin does not comprise tin stabilizers and wherein the disodium adipate of the stabilizing composition shows a particle size distribution by volume density
showing a D90 value lower than 8.0 micron, a D50 value lower than 1.8 micron and a D10 value lower than 0.6 micron, as measured by a Malvern Metasizer 3000 equipped with Aero S accessory for powder analysis.

2. The halogenated resin according to claim 1, wherein the disodium adipate salt of the stabilizing composition is present in an amount from 0.35 to 1.6 parts by weight per 100 parts by weight of CPVC.

3. The halogenated resin according to claim 2, wherein the disodium adipate salt of the stabilizing composition is present in an amount equals to 0.9 parts by weight per 100 parts by weight of CPVC.

4. The halogenated resin according to anyone of claims 1-3, wherein the resin comprises at least one plasticizer compounds.

5. The halogenated resin according to anyone of claims 1-4, further comprising stabilizing and co-stabilizing compounds selected from the group consisting of metal soaps, perchlorates and perfluoroalkanesulphonates, monosodium adipate, antioxidants, alkanolamines, zeolites and hydrotalcites, polyols, organic phosphites, β-aminocrotonic acid esters and organic co-stabilizers such as dihydropyridines, polydihydropyridines and uracil derivatives.

6. A chlorinated polyvinylchloride article made of the halogenated resin according to anyone of claims 1-5, wherein the article has a Congo red stability ≥ 53 min, measured according to Congo Red test at 200°C,
a VICAT softening temperature > 82°C,
measured according to ISO306 on 2mm compression molded plaques,
and wherein the halogenated resin formulation
has a time to fusion ≤ 78 sec, measured through a rheology evaluation via Brabender PL2100/3 torque rheometer fitted with a W50EH roller mixer head at 190°C, 40 rpm.

7. A use of disodium adipate in an amount above 0.3 parts by weight per 100 parts of polymer for stabilizing chlorinated polyvinylchloride (CPV) in absence of tin stabilizers, wherein the disodium adipate of the stabilizing composition shows a particle size distribution by volume density
showing a D90 value lower than 8.0 micron, a D50 value
lower than 1.8 micron and a D10 value lower than 0.6 micron, as measured by a Malvern Metasizer 3000 equipped with Aero S accessory for powder analysis.

## Patentansprüche

1. Halogeniertes Harz, umfassend chloriertes Polyvinylchlorid (CPVC) und eine stabilisierende Zusammensetzung, welche Dinatriumadipat in einer Menge höher als 0,3 Gewichtsteile pro 100 Teile des Polymers (phr) umfasst,
wobei das halogenierte Harz keine Zinn-Stabilisatoren umfasst, und wobei das Dinatriumadipat der stabilisierenden Zusammensetzung eine Partikelgrößenverteilung nach Volumendichte aufweist, die einen D90-Wert niedriger als 8,0 Mikron, einen D50-Wert niedriger als 1,8 Mikron und einen D10-Wert niedriger als 0,6 Mikron aufweist, gemessen durch einen Malvern Metasizer 3000, der mit Aero-S-Zubehör zur Pulveranalyse ausgestattet ist.

2. Halogeniertes Harz nach Anspruch 1, wobei das Dinatriumadipat-Salz der stabilisierenden Zusammensetzung in einer Menge von 0,35 bis 1,6 Gewichtsteilen pro 100 Gewichtsteile CPVC vorhanden ist.

3. Halogeniertes Harz nach Anspruch 2, wobei das Dinatriumadipat-Salz der stabilisierenden Zusammensetzung in einer Menge vorhanden ist, die gleich 0,9 Gewichtsteilen pro 100 Gewichtsteile CPVC ist.

4. Halogeniertes Harz nach einem der Ansprüche 1 bis 3, wobei das Harz mindestens eine Weichmacherverbindung umfasst.

5. Halogeniertes Harz nach einem der Ansprüche 1 bis 4, zudem umfassend stabilisierende und co-stabilisierende Verbindungen, die ausgewählt sind aus der Gruppe bestehend aus Metallseifen, -perchloraten und -perfluoralkansulfonaten, Mononatriumadipat, Antioxidantien, Alkanolaminen, Zeolithen und Hydrotalciten, Polyolen, organischen Phosphiten, β-Aminocrotonsäureestern und organischen Co-Stabilisatoren, wie Dihydropyridinen, Polydihydropyridinen und Uracilderivaten.

6. Gegenstand aus chloriertem Polyvinylchlorid, hergestellt mit dem halogenierten Harz nach einem der Ansprüche 1 bis 5, wobei der Gegenstand eine Kongorot-Stabilität ≥53 min aufweist, gemessen gemäß dem Kongorot-Test bei 200°C, eine ViCAT-Erweichungstemperatur >82°C, gemessen gemäß ISO306 auf formgepressten 2mm-Tafeln, und wobei die halogenierte Harzformulierung eine Zeit bis zum Schmelzen ≤78 Sek. aufweist, gemessen durch eine Rheologie-Bewertung mittels eines Brabender-PL2100/3-Drehmoment-Rheometers, das mit einem W50EH-Walzenmischkopf ausgerüstet ist, bei 190°C und 40 U/min.

7. Verwendung von Dinatriumadipat in einer Menge höher als 0,3 Gewichtsteile pro 100 Teile Polymer zum Stabilisieren von chloriertem Polyvinylchlorid (CPVC) in Abwesenheit von Zinnstabilisatoren, wobei das Dinatriumadipat der stabilisierenden Zusammensetzung eine Partikelgrößenverteilung nach Volumendichte aufweist, die einen D90-Wert niedriger als 8,0 Mikron, einen D50-Wert niedriger als 1,8 Mikron und einen D10-Wert niedriger als 0,6 Mikron aufweist, gemessen durch einen Malvern Metasizer 3000, der mit Aero-S-Zubehör zur Pulveranalyse ausgestattet ist.

## Revendications

1. Résine halogénée comprenant du polychlorure de vinyle chloré (CPVC) et une composition stabilisante comprenant de l'adipate de disodium en une quantité supérieure à 0,3 partie en poids pour 100 parties de polymère (pce),
dans laquelle la résine halogénée ne comprend pas de stabilisateurs à base d'étain et dans laquelle l'adipate de disodium de la composition stabilisante présente une distribution de taille de particule par densité volumique présentant une valeur D90 inférieure à 8,0 microns, une valeur D50 inférieure à 1,8 micron et une valeur D10 inférieure à 0,6 micron, telle que mesurée par un Malvern Metasizer 3000 équipé de l'accessoire Aero S pour l'analyse des poudres.

2. Résine halogénée selon la revendication 1, dans laquelle le sel d'adipate de disodium de la composition stabilisante est présent en une quantité de 0,35 à 1,6 partie en poids pour 100 parties en poids de CPVC.

3. Résine halogénée selon la revendication 2, dans laquelle le sel d'adipate de disodium de la composition stabilisante est présent en une quantité égale à 0,9 partie en poids pour 100 parties en poids de CPVC.

4. Résine halogénée selon l'une quelconque des revendications 1 à 3, dans laquelle la résine comprend au moins un composé plastifiant.

5. Résine halogénée selon l'une quelconque des revendications 1 à 4, comprenant en outre des composés stabilisants et co-stabilisants choisis dans le groupe constitué des savons métalliques, des perchlorates et des perfluoroalcanesulfonates, de l'adipate monosodique, des antioxydants, des aminoalcools, des zéolites et des hydrotalcites, des polyols, des phosphites organiques, des esters d'acide β-aminocrotonique et des co-stabilisants organiques tels que les dihydropyridines, les polydihydropyridines et les dérivés d'uracile.

6. Article en polychlorure de vinyle chloré fait à partir de la résine halogénée selon l'une quelconque des revendications 1 à 5, dans lequel l'article a une stabilité au rouge Congo de ≥53 min, mesurée selon le test au rouge Congo à 200 °C, une température de ramollissement VICAT > 82 °C, mesurée selon ISO306 sur des plaques moulées par compression de 2 mm, et dans lequel la formulation de résine halogénée a un temps de fusion ≤ 78 sec, mesuré par une évaluation rhéologique via un rhéomètre de couple Brabender PL2100/3 équipé d'une tête de mélangeur à rouleaux W50EH à 190 °C, 40 tr/min.

7. Utilisation d'adipate de disodium en une quantité supérieure à 0,3 partie en poids pour 100 parties de polymère pour stabiliser le polychlorure de vinyle chloré (CPV) en l'absence de stabilisateurs à base d'étain, dans laquelle l'adipate de disodium de la composition stabilisante présente une distribution de taille de particule par densité volumique montrant une valeur D90 inférieure à 8,0 microns, une valeur D50 inférieure à 1,8 micron et une valeur D10 inférieure à 0,6 micron, telle que mesurée par un Malvern Metasizer 3000 équipé de l'accessoire Aero S pour l'analyse des poudres.
